# EUROPEAN PATENT SPECIFICATION

(11) **EP 3 073 710 B1**
(45) Date of publication and mention of the grant of the patent: **22.04.2020**
(21) Application number: 16161653.7
(22) Date of filing: 22.03.2016
(51) Int. Cl.: H04L 29/08, G06F 13/18, G06F 13/16

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
PROCÉDÉ ET DISPOSITIF DE TRAITEMENT D'INFORMATIONS

(30) Priority: 23.03.2015 JP 2015059671
(43) Date of publication of application: 28.09.2016
(73) Proprietor: Buffalo Inc., Nagoya-shi, Aichi 460-8315 (JP)
(72) Inventor: Takahashi, Kenji, Nagoya-shi, Aichi 460-8315 (JP); Araki, Masakazu, Nagoya-shi, Aichi 460-8315 (JP); Inoue, Junji, Nagoya-shi, Aichi 460-8315 (JP)
(74) Representative: Epping - Hermann - Fischer

(56) References cited:
- EP-A1- 1 029 284
- JP-A- 2000 100 065
- JP-A- 2002 298 551
- US-A- 3 505 652
- US-A1- 2010 021 130

## Description

### Technical Field

The present invention relates to an information processing device and an information processing method for reading content data stored in a storage unit.

### Background Art

A content reproducing device is known which downloads content data, such as music data, from a content server, and reads out and reproduces the downloaded content data (see e.g. WO2003/102919).

In the above-mentioned content reproducing device, content data stored in a storage unit is read during its reproduction. During the reading of content data, access to the storage unit for downloading other content data may generate electric noises or increase access load, which would make reproduction of the content data unstable.

Particularly in the recent years, there is a trend that higher data transfer rates are desired for reading high resolution content data, such as voice or moving image data, so that stable access to the content data is even more necessary.

US 2010/021130 (A1) discloses a content reception and reproduction device which receives and reproduces a content having at least one reproduction start time predetermined, including: a non-real time receiver for receiving a content in non-real time; a program information reference section for referring to program information which includes a reproduction start time of at least one content and a delivery method of said at least one content; a scheduler for scheduling reception of a content whose delivery method is non-real time delivery by the non-real time receiver based on a current time and a reproduction start time of the content; a content storage section for storing at least one content received by the non-real time receiver; and a controller for starting reproduction of a content stored in the content storage section at the reproduction start time of the content.

US 3,505,652 (A) discloses a multicomputer data processing system in which the systems input-output processing unit; for example, can be given exclusive communication with specified data storage members for a specified period of time. If all memory cycles of the storage members are not required by the input-output processing unit during this period, communication between the specified storage members and other processing units is permitted during portions of the specified period which do not conflict with communication between the input-output processing unit and the specified data storage members.

EP 1029284 (B1) relates to memory access control in computer systems, and more particularly to the resolution of conflicts between a plurality of processors in systems with shared memory. EP1029284 (B1) discloses that if only one of the two processors (a IOP and a PP) is requesting memory access, the memory control unit allows that processor to access the memory. If either of the processors is already accessing the memory and the other issues a low priority level memory access request, the memory controller allows the current processor to continue its memory access, and waits until that memory access has been completed before allowing the other processor to access the memory. If, however, the PP is accessing the memory (that access being necessarily a low priority memory access) and the IOP issues a high priority memory access request, the memory controller aborts the PP's memory access and allows the IOP to access the memory immediately.

JP2000100065A provides a device with a 1st buffer for holding an inputted data stream, a writing means for writing the data stream held by the 1st buffer to a recording medium, a 2nd buffer for holding the data stream outputted to an external equipment, a reading means for reading out the data stream being recorded on the recording medium to the 2nd buffer, a predicting means for predicting the time consumption of the data stream held by this 2nd buffer in accordance with the time required for the display of the data stream held by the 2nd buffer, and a control means for controlling the writing means and the reading means.

JP2002298551A discloses a digital recording and reproducing device using randomly accessible recording medium and method for recording management information in digital recording and reproducing device.

### Summary of Invention

The present invention has been made in view of the above circumstances, and one object of the present invention is to provide an information processing device and an information processing method capable of stably reproducing content data.

According to one embodiment of the present invention, there is provided an information processing device comprising: a reading means configured to read content data from a storage unit for reproduction of the content data stored in the storage unit; and a prohibiting means configured to prohibit access to the storage unit different from access of the reading during the reading of the content data by the reading means. The prohibiting means is configured to prohibit the different access by suspending the different access in progress when the reading of the content data by the reading means starts, wherein the different access includes access of writing downloaded content data into the storage unit.

The information processing device may be connected with a content distribution server and may further comprise a download means configured to download content data from the content distribution server and write the downloaded content data into the storage unit. The prohibiting means may be configured to prohibit access of writing the content data downloaded by the download means into the storage unit during the reading of the content data by the reading means.

In the above information processing device, the download means may be configured to periodically inquire to the content distribution server about whether there is any content data to be downloaded and may be configured to download the content data if there is content data to be downloaded.

In the above information processing device, the download means may be configured to inquire to the content distribution server about whether there is any content data to be downloaded when the information processing device is powered on and may be configured to download the content data if there is content data to be downloaded.

In the information processing device, the different access may include access of reading content data from the storage unit, which is different from the reading by the reading means.

The information processing device may be connected with a user terminal and may further comprise a data transfer means configured to read the content data stored in the storage unit and transfer the content data to the user terminal. The prohibiting means may be configured to prohibit access of reading the content data by the data transfer means during the reading of the content data by the reading means.

The information processing device may be connected with an external storage device which is different from the storage unit and may comprise a data transfer means configured to read the content data stored in the storage unit and write the read content data into the external storage device. The prohibiting means may be configured to prohibit access of reading the content data by the data transfer means during the reading of the content data by the reading means.

In the information processing device, the prohibiting means may be configured to prohibit the different access by not starting the different access during the reading of the content data by the reading means.

In the information processing device, the prohibiting means may be configured to prohibit the different access by making greater a difference between a priority of a task of reading by the reading means and a priority of a task of executing the different access during the reading of the content data by the reading means.

In the information processing device, the prohibiting means may be configured to prohibit the different access by making a priority of a task of executing the different access lower than that of a task of reading by the reading means during the reading of the content data by the reading means.

The information processing device may further comprise: a temporary memory which is different from the storage unit. The prohibiting means may be configured to write data to be written into the storage unit into the temporary memory during the reading of the content data by the reading means and may be configured to read the data written in the temporary memory and write the read data into the storage unit while the reading by the reading means is not executed.

According to another embodiment of the present invention, there is provided an information processing method comprising: reading content data from a storage unit for reproduction of the content data stored in the storage unit; and prohibiting access to the storage unit different from the reading during the reading of the content data for reproduction of the content data, wherein the different access is suspended in progress when the reading of the content data starts, wherein the different access includes access of writing downloaded content data into the storage unit. According to the present invention, different access to the storage unit is prohibited during reading of the content data from the storage unit for content reproduction. Therefore, it is less likely that the reading of the content data is impeded by the different access, so that the content data can be read more stably.

### Brief Description of Drawings

Fig. 1 shows a schematic view of the whole configuration of a content reproduction system including an information processing device according to an embodiment of the present invention.
Fig. 2 shows a configuration block diagram of the information processing device according to the embodiment of the present invention.
Fig. 3 shows a functional block diagram of the information processing device according to the embodiment of the present invention.
Fig. 4 shows a sequence diagram of an exemplary process executed by the content reproduction system during purchase procedure of the content.

### Description of Embodiments

Hereinafter, embodiments of the present invention will be described in detail with reference to the accompanying drawings.

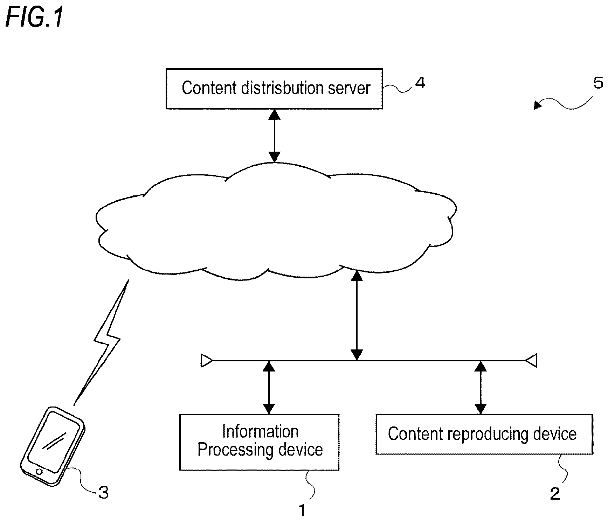

Fig. 1 shows a schematic view of the whole configuration of a content reproduction system 5 including an information processing device 1 according to an embodiment of the present invention. As shown in the Fig. 1, the content reproduction system 5 includes the information processing device 1, a content reproducing device 2, a user terminal 3, and a content distribution server 4.

The information processing device 1 stores content data to be reproduced by the content reproducing device 2 and outputs the content data to the reproducing device 2. The information processing device 1 may be, for example, a personal computer, a Network Attached Storage (NAS), or a media server. The detailed configuration of the information processing device 1 will be described later.

The content reproducing device 2 is a player for reproducing the content data stored in the information processing device 1. Hereafter, in the embodiment, the content reproducing device 2 is an audio player reproducing voice data or audio data. For example, the content reproducing device 2 reproduces the content by expanding or decoding compressed or encoded voice data stored in the information processing device 1, converting them into analog voice signals and outputting them to a speaker. The content reproducing device 2 may be connected with the information processing device 1, for example, in accordance with Digital Living Network Alliance (DLNA) or other protocols.

The user terminal 3 may be a terminal device used by a user of the system, such as a smartphone or a personal computer. With the user terminal 3, the system user can request accessing to the content distribution server 4, specify distributable contents stored in the content distribution server 4, and download the specified contents through the information processing device 1. The download request may include purchase procedures for pay contents or acquisition requests for free contents, trial requests for trial contents, and other various requests for contents from the information processing device 1 via the content distribution server 4.

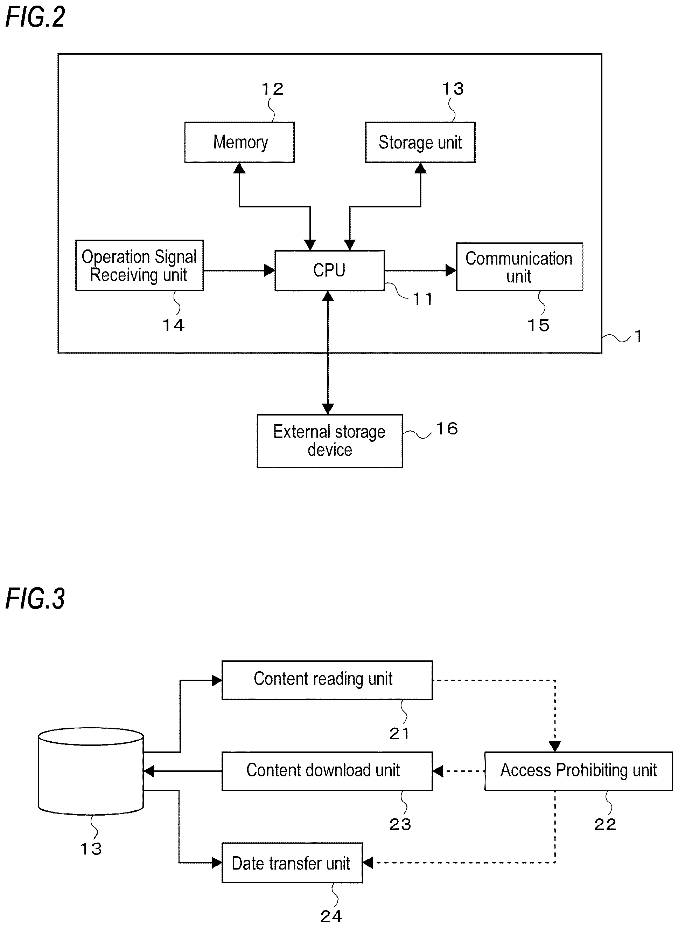

The content distribution server 4 is a server device which serves as a distribution source of content data. The content distribution server 4 is connected with the information processing device 1 and the user terminal 3 via Internet and/or other communication networks. The content distribution server 4 distributes to the information processing device 1 the contents which a user requests to download through the user terminal 3. Fig. 2 shows a configuration block diagram of the information processing device 1. As shown in Fig. 2, the information processing device 1 includes a CPU 11, a memory 12, a storage unit 13, an operation signal receiving unit 14, and a communication unit 15. The information processing device 1 is configured to be connectable with an external storage device 16. An example of the connection between the external storage device 16 and the information processing device 1 will be described later.

The CPU 11 is a program control device which executes various information processes according to programs stored in the memory 12. An example of the process executed by the CPU 11 in the embodiment will be described later. The memory 12 includes volatile RAM and nonvolatile ROM and stores programs for the CPU 11 and data for these programs. As described below, the memory 12 may further include a cache memory (temporary memory) which temporarily stores data to be written into the storage unit 13.

The storage unit 13 is a nonvolatile storage device and may be, for example, a hard disk drive (HDD) or a solid state drive (SSD). The storage unit 13 stores content data for the content reproducing device 2 to reproduce.

The operation signal receiving unit 14 is a device through which a user provides operation inputs to the information processing device 1, and is configured to receive an operation input not only from physical means, such as buttons and switches provided on the casing surface of the information processing device 1, but also from other devices via wired or wireless connections.

The communication unit 15 is a communication interface such as a LAN card, via which the information processing device 1 is connected with various devices on a LAN or wireless communication network. The information processing device 1 of this embodiment transmits data to and receives data from the content reproducing device 2 or the content distribution server 4 via the communication unit 15.

The external storage device 16 is an external hard disk drive, for example, which is connected to the information processing device 1 by the user. The external storage device 16 is configured such that data can be read from and written in the CPU 11 of the information processing device 1 via a bus interface such as USB. As described later, the external storage device 16 is used to back up the content data stored in the storage unit 13. Incidentally, the USB interface is one example, and the external storage device 16 may be connected via bus connection such as IEEE1394, PCI-Express, or Thunderbolt (registered trademark), or via wireless connection such as Bluetooth (registered trademark), 2.4GHz band, 5GHz band or 60GHz band, or via short-distance wireless connection such as NFC or RFID.

The function of the information processing device 1 according to the embodiment is illustrated below with reference to the functional block diagram in Fig. 3. As shown in Fig. 3, the information processing device 1 includes, as functional units for accessing contents stored in the storage unit 13, a content reading unit 21, an access prohibiting unit 22, a content download unit 23, and a data transfer unit 24. These functions are realized while the CPU 11 executes programs stored in the memory 12. The programs may be stored in the storage unit 13 during manufacturing of the information processing device 1 and read the storage unit 13 and written into the memory 12 when executed, or may be read from a computer-readable recording medium and provided to the information processing device 1 after shipment thereof. The program may be provided to the information processing device 1 via a communication network.

The content reading unit 21 reads content data stored in the storage unit 13 for reproduction by the content reproducing device 2. The read content data is sent to the content reproducing device 2 via the communication unit 15. The content reproducing device 2 receives the content data read by the content reading unit 21 and reproduces the received content data.

In the embodiment, the reading of the content data by the content reading unit 21 is executed for real-time reproduction. That is, the reading of the content data by the content reading unit 21 and the reproduction of the contents by the content reproducing device 2 are executed continuously. At least a part of the content data is read while a preceding part of the same content data is being reproduced by the content reproducing device 2. Such real-time reproduction is realized by means of the streaming delivery technology or the progressive download technology.

The reading and reproduction of the content data may be started in response to an instruction of the user. More particularly, for example, the content reading unit 21 starts to read the contents when the user instructs the operation signal receiving unit 14 in the information processing device 1 to start reproduction by operating the content reproducing device 2. Incidentally, hereafter, the access to the storage unit 13 is referred to as 'reproduction access' when the content reading unit 21 reads the content data from the storage unit 13 for content reproduction. When the content reading unit 21 is reading the content data, the access prohibiting unit 22 prohibits any access to the storage unit 13 different from the access of reading (i.e. reproduction access). Hereafter, the access to the storage unit 13 different from the reproduction access is called independent access.

The independent access is executed by a task running independently from a task of content reproduction for purposes other than content data reproduction. The independent access may be either access of writing content data into the storage unit 13 or access of reading content data from the storage unit 13, which is different from the reading of the reproduction access. More particular examples of the independent access will be described later.

Herein, a task refers to a unit of process managed by the operating system of the information processing device 1 and executed by the CPU 11. Each task is assigned to the CPU 11 via the operating system and the CPU 11 executes the task. Incidentally, a process unit assigned to the CPU 11 is sometimes referred to as a job, a process, a thread and so on, but is collectively referred to as a task in this specification. The operating system assigns a plurality of tasks to the CPU 11 according to the prescribed rules in a time division manner. Thus, a plurality of tasks are executed in parallel. In this embodiment, a task for executing reproduction access and a task for executing independent access are executed by the CPU 11. Hereafter, the task for executing reproduction access is referred to as a reproduction task. The reproduction task is a task to implement the function of the content reading unit 21. Furthermore, the task of executing independent access is referred to as an independent task. The independent task includes tasks to implement the functions of the content download unit 23 and the data transfer unit 24. When an independent access and a reproduction access take place at the same time, the quality of reproduced contents may be negatively influenced by the access delaying during reproduction or the noises produced by the independent access which impede the data communication of the reproduction access. Therefore, in the embodiment, the access prohibiting unit 22 restricts at least part of the independent access, so as to enable the stable performance of the reproduction access. The specific method of access prohibition by the access prohibiting unit 22 will be described later. The content download unit 23 downloads new content data from the content distribution server 4 and writes it into the storage unit 13. The writing of the content data into the storage unit 13 by the content download unit 23 is one of the independent accesses. Therefore, during the reproduction access, the access prohibiting unit 22 prohibits the writing of new content data into the storage unit 13 by the content download unit 23. Particularly, the following noises may have negative influence on the quality of the reproduced contents when the content data is downloaded from the content distribution server 4 and written into the storage unit 13. In a network, in addition to the desired content data, there may be various control data traffics, so noises may be generated when these data are processed by a circuit for network communication. Also, if content data is downloaded, the content data is written into the storage unit 13. If the storage unit 13 is an HDD, then compared with reading only operation for reproduction, a seek operation may take place, which causes noises. However, in the embodiment, the access prohibiting unit 22 prohibits the writing of the downloaded data into the storage unit 13 by the content download unit 23, so as to suppress the deterioration of the quality of reproduced contents.

In the embodiment, the download by the information processing device 1 of the content data provided by the content distribution server 4, can be requested by the user terminal 3 separately from the information processing device 1 and the content reproducing device 2.

In this way, the content download unit 23 downloads the content data requested by the user from the content distribution server 4. The content data is downloaded via the content download unit 23 and stored in the storage unit 13, so that the user can reproduce the requested content data. Specifically, the content download unit 23 checks whether there is any content data to be download by periodically inquiring to the content distribution server 4 at a prescribed timing. Then, after it is confirmed by inquiring that there is content data newly requested by the user for download after the last inquiry, the newly requested content data is downloaded and stored in the storage unit 13. In this way, the content data requested by the user for download via the user terminal 3, which is different from the information processing device 1, is stored in the storage unit 13 of the information processing device 1.

The prescribed timing at which the content download unit 23 inquires to the content distribution server 4 may include, for example, a periodical timing and a timing when the user performs the prescribed operation on the operation signal receiving unit 14. Particularly, the content download unit 23 may inquire to the content distribution server 4 at the timing when the user powers on the information processing device 1. With this timing control, the information processing device 1 can download content data requested by the user at the timing when the user wants to start the information processing device 1. In the meantime, at the timing when the information processing device 1 is powered on, the information processing device 1 may not connect to a communication network. Thus, the content download unit 23 may inquire to the content distribution server 4 at the timing when the information processing device 1 changes its status from disconnected status to connected status.

When the external storage device 16 is connected with the information processing device 1, the data transfer unit 24 executes data transfer which reads content data stored in the storage unit 13 and writes the data into the external storage device 16. The data transfer is executed for the purposes such as to back up the content data stored in the storage unit 13. The reading of the content data from the storage unit 13 for the data transfer is also one of the independent accesses. Therefore, during the reproduction access, the access prohibiting unit 22 prohibits the reading of the content data by the data transfer unit 24. The data transfer may be executed, for example, either at a prescribed timing or in response to the instruction by the user to the operation signal receiving unit 14.

The data transfer may include the reading of the content data stored in the storage unit 13 for sending to an external information processing device, such as the user terminal 3. For example, when the user connects the user terminal 3 to the information processing device 1 and requests the transfer of the content data, the data transfer unit 24 reads the content data stored in the storage unit 13 and send the data to the user terminal 3. Therefore, the user can transfer own content data to a device other than the information processing device 1. During the reproduction access, the access prohibiting unit 22 also prohibits the reading of content data by the data transfer unit 24.

Hereafter, examples of specific access control, with which the access prohibiting unit 22 prohibits the independent access, are described.

As a first control, the access prohibiting unit 22 may execute access control during the reproduction access such that independent access is not started.

For example, in the above description, the content download unit 23 periodically inquires to the content distribution server 4, but during the reproduction of the contents, the access prohibiting unit 22 executes access control such that the inquiry is not made. Alternatively, the access prohibiting unit 22 may not prohibit inquiries themselves and when it is determined, after inquiries, that new content data is left to be downloaded, the access prohibiting unit 22 may perform such control as to prevent the download of the content data to be downloaded from being started. Further, the access prohibiting unit 22 executes access control such that the periodical data transfer by the data transfer unit 24 is not executed. According to this control, even when an independent task is periodically scheduled to be executed, the independent task is not executed if the reproduction task is executed when a timing arrives for the independent task, so as to avoid any interference between the reproduction access and the independent access.

Incidentally, in this control, the access prohibiting unit 22 may execute access control such that when there is an independent task which is scheduled to be executed during the content reproduction but is prohibited by the access prohibiting unit 22, the independent task will be executed after the content reproduction finishes.

As a second control, the access prohibiting unit 22 may prohibit an independent access by suspending the independent access in progress when a reproduction access starts. Specifically, the access prohibiting unit 22 suspends the operation of the independent task if the independent task is in progress when the content reproduction starts in response to the instruction of the user. Thus, although the independent task in progress is suspended, the reproduction access can be executed stably. Even in this control, the access prohibiting unit 22 may restart the suspended independent task after the content reproduction finishes.

As a third control, the access prohibiting unit 22 may prohibit an independent access which interferes with a reproduction access by controlling the priorities of tasks for executing respective accesses. Specifically, the access prohibiting unit 22 executes access control such that during the reproduction task, the independent task has a lower priority than the reproduction task. Herein, a priority is an indicator that determines which task is prioritized when the operating system assigns various tasks to the CPU 11. The operating system executes access control to assign tasks of higher priority to the CPU 11 before tasks of lower priority. Thus, it is less likely that the tasks of lower priority impede the operation of the tasks of higher priority. For example, when an independent task is the writing of content data into the storage unit 13 by the content download unit 23, if the download task has priority over the reproduction task, the download task is executed on priority, which causes writing into the storage unit 13. Thus, when the reading of the content data from the storage unit 13 stops due to this writing, the data transfer to the content reproducing device 2 also stops, which causes noise even if the stop lasts for a short time. However, it is unlikely under such priority control that the independent task impedes the operation of the reproduction task so that stable reproduction of the content data can be ensured.

As the method for this priority control, during the operation of the reproduction task, the access prohibiting unit 22 may assign to the reproduction task a priority higher than the predetermined value, or assign to the independent task a priority lower than the predetermined value. Further, when a task is started, the access prohibiting unit 22 may assign to the task a priority dynamically determined depending on the operations of other tasks. Specifically, if an independent task is already in progress when a reproduction task is started, the access prohibiting unit 22 specifies a priority assigned to the operating independent task, and assigns to the reproduction task a priority higher than the specified priority. If a reproduction task is already in progress when an independent task is about to be started, a priority of the reproduction task in progress may be identified and a priority lower than the identified priority may be assigned to the independent task which is about to start. According to this control, the reproduction task obtains a priority higher than that of the independent task, so that the reproduction access will not be impeded by the independent access, and the independent task will be started when the CPU 11 is not occupied by the reproduction task.

Further, as one form of the method which prohibits the independent access through controlling priorities of tasks, the access prohibiting unit 22 may execute access control such that during the reproduction task, a gap between the priority of the reproduction task and the priority of the independent task is widened. For example, priority values are initially assigned to both the reproduction task and the independent task such that the reproduction task has priority over the independent task. Even under such circumstances, the access prohibiting unit 22 may execute access control such that a gap between the priority of the reproduction task and the priority of the independent task is still widened. Thus, when each task is assigned to the CPU 11 depending on its priority, it is less likely that the independent tasks are assigned to the CPU 11, and it becomes possible to prioritize the reproduction tasks so as not to be prevented from being executed. As a specific embodiment of this control, the access prohibiting unit 22 may also change the priority of the reproduction task from the initial value to a higher one if a reproduction task is about to be started while an independent task is in progress. Furthermore, the access prohibiting unit 22 may also change the priority of the independent task from the initial value to a lower one if an independent task is about to be started while a reproduction task is in progress. Thus, compared with the case without such control, the priority gap can be widened between the reproduction task and the independent task.

As a fourth control, the access prohibiting unit 22 may also use the temporary memory of the memory 12 to prohibit the independent access. Particularly, during the reproduction access, when there is data to be written into the storage unit 13 via the independent access, the access prohibiting unit 22 writes the data into the temporary memory instead of the storage unit 13. Thereafter, when the reproduction access is not executed, the access prohibiting unit 22 reads the data written into the temporary memory and writes it into the storage unit 13. Such manner of control is advantageous when the independent access is writing into the storage unit 13 (for example, download process of new content data). Access control may be executed by writing the new content data into the temporary memory such that the reproduction access to the storage unit 13 does not interfere with the independent access. The temporary memory may be either a RAM or a nonvolatile memory, such as a flash ROM, configuring the memory 12.

The controls of access prohibition described above may be made in combination. For example, by combining the first and the second controls as described above, access control may be executed such that the reproduction task or the independent task will not be executed in parallel no matter which task is executed first. Furthermore, the first control may be combined with the third or the fourth control. In this case, the independent task will not be started during the reproduction access; and if content reproduction starts while an independent task is in progress, its task priority can be adjusted or the temporary memory can be used to continue the execution of the independent task. Thus, the independent access in progress will not interfere with the reproduction access while continuing the process of the independent task. In contrast, the second control may be combined with the third or the fourth control. In addition, the fourth control may be applied to the independent access to write into the storage unit 13 whereas the other controls may be applied to independent access to read the content data from the storage unit 13.

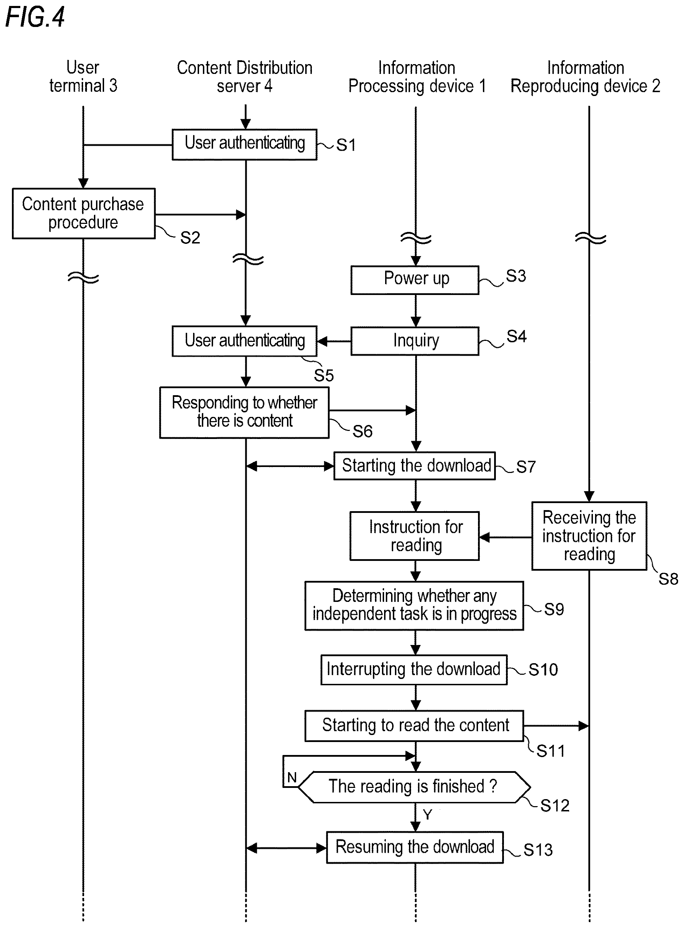

A specific exemplary process of the content reproduction system 5 is described with the sequence diagram in the Fig. 4. As shown in Fig. 4, while the information processing device 1 is powered off, the user wants to request the download of content data via the user terminal 3, and thereafter, the information processing device 1 is powered on to reproduce contents. Incidentally, the download request of the user in this embodiment is content purchase procedures, but the download request may include requests for trial listening contents or for free contents as described above. Firstly, the user accesses the pre-registered address of the content distribution server 4 via the user terminal 3. The content distribution server 4 authenticates authentication information, such as an user ID inputted (Step S1). Thereafter, the purchase procedure is executed for the content data provided by the content distribution server 4 (Step S2).

Then, the user powers on the information processing device 1 (Step S3). After the information processing device 1 is started with this operation, the content download unit 23 inquires to the content distribution server 4 to check whether the content distribution server 4 has any content to be downloaded (Step S4). At this time, the content download unit 23 receives the authentication of the content distribution server 4 with the authentication information, such as user ID, stored in the storage unit 13 (Step S5). Accordingly, the content distribution server 4 can check if the user of the information processing device 1 who made the inquiry is the same user who took the purchase procedure at Step S2. After the authentication, the content distribution server 4 responds to the inquiry (Step S6). In this embodiment, at Step S2, the user pays for new content data, so that it is confirmed that there are contents to be downloaded. Therefore, the content download unit 23 starts the process of downloading the content data (Step S7).

During the download process in Step S7, the user sends an instruction for reading contents to the information processing device 1 via the content reproducing device 2 (Step S8). The access prohibiting unit 22 receives this instruction and determines whether any independent task is currently in progress (Step S9). If no independent task is in progress, the reading for content reproduction starts as usual. In this embodiment, the content download process started in Step S7 is in progress, so it is determined that the independent task is in progress. In this case, the access prohibiting unit 22 executes access control which prohibits the independent access by the download process. As specific access control methods, the priority of the reproduction task may be made higher than that of the independent task, i.e. download process, or the downloaded content data may be stored in the temporary memory instead of the storage unit 13. In this embodiment, however, the download process itself is suspended (Step S10). When the download process is suspended, the content reading unit 21 starts the process of reading the content data (Step S11).

Then, the access prohibiting unit 22 monitors the content reproduction process until it finishes (Step S12). After detecting that the content reproduction process has been completed, the access prohibiting unit 22 resumes the download process suspended in Step S10 (Step S13). Thus, the content download unit 23 can execute the download process suspended after the content reproduction finished and store the content bought by the user to the storage unit 13.

As described above, when the user terminal 3, which is different from the information processing device 1, can be used to request downloading contents, the information processing device 1 is not necessarily powered on at the timing of the request for downloading contents. The user might want to use the requested content data as soon as possible. Therefore, by the content download unit 23 checking with the content distribution server 4 as to whether there are any contents to be downloaded to the content distribution server 4 when the information processing device 1 is powered on, it becomes possible to immediately download the user-requested contents while the information processing device 1 is powered off. On the other hand, in most cases, it is presumably when the user desires to reproduce the content data stored in the storage unit 13 that the user turns on the information processing device 1. Therefore, it is likely that the download process will interfere with the reproduction task after the power is on as described above. Thus, the information processing device 1 according to the embodiment can execute access control such that the content reproduction, which may be otherwise involved in interference, can be executed stably by prohibiting the independent access accompanying the download process during the reproduction.

Further, as described above, content download process is executed not only after the information processing device 1 has been powered on, but also periodically while the information processing device 1 is being energized. Therefore, it is possible for the periodical download processes to interfere with content reproduction process which is started in response to the instruction of the user. In this case, the access prohibiting unit 22 can prohibit the independent access taking place due to the download process by using one or more of the above described methods. More particularly, for example, when, during the content reproduction, the timing for an inquiry comes up about whether or not the downloading should be executed, the access prohibiting unit 22 prohibits inquiries about whether to download or the execution of the download process based on the inquiry results, or adjusts the priorities of respective tasks so as to prohibit the independent access taking place due to the download process. In contrast, during the download process taking place due to the periodical inquiries, when the user gives an instruction for content reproduction, it is also possible to execute access control such that the download process will not impede the reproduction task, as in the operations after Step S9 in the Fig. 4.

The embodiments of the present invention are not limited to the embodiments described above. For example, in the above description, the information processing device 1 is connected with the content reproducing device 2 via a communication network, but these two may be connected with each other directly via a dedicated interface. Furthermore, in the above description, the content reproduction process is executed with the content reproducing device 2 which is different from the information processing device 1, but the content reproduction process may be executed with the information processing device 1 itself. In this case, the content reproducing device 2 is not required.

Furthermore, in the above description, the user accesses the content distribution server 4 for requests to download contents using the user terminal 3 which is different from the information processing device 1, but the user may also use the information processing device 1 for requests to download contents. Furthermore, other devices rather than the operation signal receiving unit 14 embedded in the information processing device 1, such as the user terminal 3, may also be used to operate the information processing device 1. Further, it is also possible for the user terminal 3 not to access the content distribution server 4 directly for download requests, but to access and instruct the information processing device 1 to perform download requests.

Furthermore, in the above description, the content data stored in the information processing device 1 is voice or audio data, but the content data is not limited to these, and may also be various data reproducible in a real-time manner, such as moving image data.

## Claims

1. An information processing device (1) comprising:
a reading means (21) configured to read content data from a storage unit (13) for reproduction of the content data stored in the storage unit (13); and
a prohibiting means (22) configured to prohibit any access to the storage unit (13) different from access of the reading during the reading of the content data by the reading means (21),
wherein the prohibiting means (22) is configured to prohibit the different access by suspending the different access in progress when the reading of the content data by the reading means (21) starts, and
wherein the different access includes access of writing downloaded content data into the storage unit (13).

2. The information processing device (1) according to claim 1,
wherein the information processing device (1) is connected with a content distribution server (4) and further comprises: a download means (23) configured to download content data from the content distribution server (4) and write the downloaded content data into the storage unit (13), and
wherein the prohibiting means (22) is configured to prohibit access of writing the content data downloaded by the download means (23) into the storage unit (13) during the reading of the content data by the reading means (21).

3. The information processing device (1) according to claim 2,
wherein the download means (23) is configured to periodically inquire to the content distribution server (4) about whether there is any content data to be downloaded and is configured to download the content data if there is content data to be downloaded.

4. The information processing device (1) according to claim 2,
wherein the download means (23) is configured to inquire to the content distribution server (4) about whether there is any content data to be downloaded when the information processing device (1) is powered on and then is configured to download the content data if there is content data to be downloaded.

5. The information processing device (1) according to any one of claim 1 to 4,
wherein the different access includes access of reading content data from the storage unit (13), which is different from the reading by the reading means (21).

6. The information processing device (1) according to claim 5,
wherein the information processing device (1) is connected with a user terminal (3) and further comprises: a data transfer means (24) configured to read the content data stored in the storage unit (13) and transfer the read content data to the user terminal (3), and
wherein the prohibiting means (22) is configured to prohibit access of reading the content data by the data transfer means (24) during the reading of the content data by the reading means (21).

7. The information processing device (1) according to claim 5,
wherein the information processing device (1) is connected with an external storage device (16) which is different from the storage unit (13), and further comprises: a data transfer means (24) configured to read the content data stored in the storage unit (13) and write the read content data into the external storage device (16), and
wherein the prohibiting means (22) is configured to prohibit access of reading the content data by the data transfer means (24) during the reading of the content data by the reading means (21).

8. The information processing device (1) according to any of claim 1 to 7,
wherein the prohibiting means (22) is configured to prohibit the different access by not starting the different access during the reading of the content data by the reading means (21).

9. The information processing device (1) according to any of claim 1 to
wherein the prohibiting means (22) is configured to prohibit the different access by making greater a difference between a priority of a task of reading by the reading means (21) and a priority of a task of executing the different access during the reading of the content data by the reading means (21).

10. The information processing device (1) according to any of claim 1 to 7,
wherein the prohibiting means (22) is configured to prohibit the different access by controlling a priority of a task of executing the different access lower than a priority of a task of reading by the reading means (21) during the reading of the content data by the reading means (21).

11. The information processing device (1) according to any of claim 1 to 4, further comprising:
a temporary memory (12) which is different from the storage unit (13),
wherein the prohibiting means (22) is configured to write data to be written into the storage unit (13) into the temporary memory (12) during the reading of the content data by the reading means (21), and is configured to read the data written in the temporary memory (12) and write the read data into the storage unit (13) while the reading by the reading means (21) is not executed.

12. An information processing method comprising:
a step (S11) of reading content data from a storage unit (13) for reproduction of the content data stored in the storage unit (13); and
a step (S10) of prohibiting any access to the storage unit different from access of the reading during the reading of the content data for reproduction of the content data, wherein the different access is suspended in progress when the reading of the content data starts and
wherein the different access includes access of writing downloaded content data into the storage unit (13).

13. An information processing method according to claim 12,
wherein the method is performed on an information processing device according to any of claim 1 to 11.

## Patentansprüche

1. Eine Informationsverarbeitungsvorrichtung (1), die Folgendes aufweist:
eine Leseeinrichtung (21), die konfiguriert ist, um Inhaltsdaten aus einer Speichereinheit (13) zur Wiedergabe der in der Speichereinheit (13) gespeicherten Inhaltsdaten zu lesen; und
eine Verbotseinrichtung (22), die konfiguriert ist, um jeglichen Zugriff auf die Speichereinheit (13) zu verbieten, welcher sich vom Lesezugriff während des Lesens der Inhaltsdaten durch die Leseeinrichtung (21) unterscheidet,
wobei die Verbotseinrichtung (22) konfiguriert ist, um den unterschiedlichen Zugriff zu verbieten, indem der unterschiedliche, in Gang befindliche Zugriff ausgesetzt wird, wenn das Lesen der Inhaltsdaten durch die Leseeinrichtung (21) beginnt, und
wobei der unterschiedliche Zugriff den Zugriff des Schreibens von heruntergeladenen Inhaltsdaten in die Speichereinheit (13) beinhaltet.

2. Informationsverarbeitungsvorrichtung (1) gemäß Anspruch 1,
wobei die Informationsverarbeitungsvorrichtung (1) mit einem Inhaltsverteilungsserver (4) verbunden ist und darüber hinaus Folgendes aufweist: eine Download-Einrichtung (23), die konfiguriert ist, um Inhaltsdaten von dem Inhaltsverteilungsserver (4) herunterzuladen und die heruntergeladenen Inhaltsdaten in die Speichereinheit (13) zu schreiben, und
wobei die Verbotseinrichtung (22) konfiguriert ist, um den Zugriff des Schreibens der von der Download-Einrichtung (23) heruntergeladenen Inhaltsdaten in die Speichereinheit (13) während des Lesens der Inhaltsdaten durch die Leseeinrichtung (21) zu verbieten.

3. Informationsverarbeitungsvorrichtung (1) gemäß Anspruch 2,
wobei die Download-Einrichtung (23) konfiguriert ist, um bei dem Inhaltsverteilungsserver (4) periodisch nachzufragen, ob es Inhaltsdaten gibt, die herunterzuladen sind, und konfiguriert ist, um die Inhaltsdaten herunterzuladen, falls es Inhaltsdaten gibt, die herunterzuladen sind.

4. Informationsverarbeitungsvorrichtung (1) gemäß Anspruch 2,
wobei die Download-Einrichtung (23) konfiguriert ist, um bei dem Inhaltsverteilungsserver (4) nachzufragen, ob es Inhaltsdaten gibt, die herunterzuladen sind, wenn die Informationsverarbeitungsvorrichtung (1) eingeschaltet wird, und dann konfiguriert ist, um die Inhaltsdaten herunterzuladen, falls es Inhaltsdaten gibt, die herunterzuladen sind.

5. Informationsverarbeitungsvorrichtung (1) gemäß einem der Ansprüche 1 bis 4,
wobei der unterschiedliche Zugriff den Zugriff des Lesens von Inhaltsdaten aus der Speichereinheit (13) umfasst, welches sich von dem Lesen durch die Leseeinrichtung (21) unterscheidet.

6. Informationsverarbeitungsvorrichtung (1) gemäß Anspruch 5,
wobei die Informationsverarbeitungsvorrichtung (1) mit einem Benutzerendgerät (3) verbunden ist und darüber hinaus Folgendes aufweist: eine Datenübertragungseinrichtung (24), die konfiguriert ist, um die in der Speichereinheit (13) gespeicherten Inhaltsdaten zu lesen und die gelesenen Inhaltsdaten an das Benutzerendgerät (3) zu übertragen, und
wobei die Verbotseinrichtung (22) konfiguriert ist, um den Zugriff auf das Lesen der Inhaltsdaten durch die Datenübertragungseinrichtung (24) während des Lesens der Inhaltsdaten durch die Leseeinrichtung (21) zu verbieten.

7. Informationsverarbeitungsvorrichtung (1) gemäß Anspruch 5,
wobei die Informationsverarbeitungsvorrichtung (1) mit einer externen Speichervorrichtung (16) verbunden ist, die sich von der Speichereinheit (13) unterscheidet, und darüber hinaus Folgendes aufweist: eine Datenübertragungseinrichtung (24), die konfiguriert ist, um die in der Speichereinheit (13) gespeicherten Inhaltsdaten zu lesen und die gelesenen Inhaltsdaten in die externe Speichervorrichtung (16) zu schreiben, und
wobei die Verbotseinrichtung (22) konfiguriert ist, um den Zugriff auf das Lesen der Inhaltsdaten durch die Datenübertragungseinrichtung (24) während des Lesens der Inhaltsdaten durch die Leseeinrichtung (21) zu verbieten.

8. Informationsverarbeitungsvorrichtung (1) gemäß einem der Ansprüche 1 bis 7,
wobei die Verbotseinrichtung (22) konfiguriert ist, um den unterschiedlichen Zugriff zu verbieten, indem der unterschiedliche Zugriff während des Lesens der Inhaltsdaten durch die Leseeinrichtung (21) nicht gestartet wird.

9. Informationsverarbeitungsvorrichtung (1) gemäß einem der Ansprüche 1 bis 7,
wobei die Verbotseinrichtung (22) konfiguriert ist, um den unterschiedlichen Zugriff zu verbieten, indem ein Unterschied zwischen einer Priorität einer Aufgabe des Lesens durch die Leseeinrichtung (21) und eine Priorität einer Aufgabe des Ausführens des unterschiedlichen Zugriffs während des Lesens der Inhaltsdaten durch die Leseeinrichtung (21) größer gemacht wird.

10. Informationsverarbeitungsvorrichtung (1) gemäß einem der Ansprüche 1 bis 7,
wobei die Verbotseinrichtung (22) konfiguriert ist, um den unterschiedlichen Zugriff zu verbieten, indem eine Priorität einer Aufgabe des Ausführens des unterschiedlichen Zugriffs, die niedriger ist als eine Priorität einer Aufgabe des Lesens durch die Leseeinrichtung (21), während des Lesens der Inhaltsdaten durch die Leseeinrichtung (21) gesteuert wird.

11. Informationsverarbeitungsvorrichtung (1) gemäß einem der Ansprüche 1 bis 4, die darüber hinaus Folgendes aufweist:
einen temporären Speicher (12), der sich von der Speichereinheit (13) unterscheidet,
wobei die Verbotseinrichtung (22) konfiguriert ist, um in die Speichereinheit (13) zu schreibende Daten in den temporären Speicher (12) während des Lesens der Inhaltsdaten durch die Leseeinrichtung (21) zu schreiben, und konfiguriert ist, um die in den temporären Speicher (12) geschriebenen Daten zu lesen und die gelesenen Daten in die Speichereinheit (13) zu schreiben, während das Lesen durch das Leseeinrichtung (21) nicht ausgeführt wird.

12. Ein Informationsverarbeitungsverfahren, das Folgendes umfasst:
einen Schritt (S11) des Lesens von Inhaltsdaten aus einer Speichereinheit (13) zur Wiedergabe der Inhaltsdaten, die in der Speichereinheit (13) gespeichert sind; und
einen Schritt (S10) des Verbietens jeglichen Zugriffs auf die Speichereinheit, der sich von dem Zugriff des Lesens während des Lesens der Inhaltsdaten zur Wiedergabe der Inhaltsdaten unterscheidet, wobei der unterschiedliche, in Gang befindliche Zugriff ausgesetzt wird, wenn das Lesen der Inhaltsdaten beginnt, und
wobei der unterschiedliche Zugriff den Zugriff des Schreibens von heruntergeladenen Inhaltsdaten in die Speichereinheit (13) beinhaltet.

13. Informationsverarbeitungsverfahren gemäß Anspruch 12,
wobei das Verfahren auf einer Informationsverarbeitungsvorrichtung gemäß einem der Ansprüche 1 bis 11 ausgeführt wird.

## Revendications

1. Dispositif de traitement d'informations (1) comprenant :
- un moyen de lecture (21) conçu pour lire des données relatives au contenu à partir d'une unité de stockage (13), destiné à la reproduction des données relatives au contenu dans l'unité de stockage (13) ; et
- un moyen d'interdiction (22) conçu pour interdire tout accès à l'unité de stockage (13) autre que l'accès de la lecture pendant la lecture des données relatives au contenu par le moyen de lecture (21),
dans lequel le moyen d'interdiction (22) est conçu pour interdire ledit autre accès en interrompant ledit autre accès en cours lorsque la lecture des données relatives au contenu par le moyen de lecture (21) débute, et
dans lequel ledit autre accès inclue l'accès d'écriture de données téléchargées relatives au contenu dans l'unité de stockage (13).

2. Dispositif de traitement d'informations (1) selon la revendication 1,
dans lequel le dispositif de traitement d'informations (1) est connecté à un serveur de distribution de contenu (4) et comprend en outre : un moyen de téléchargement (23) conçu pour télécharger des données relatives au contenu à partir du serveur de distribution de contenu (4) et pour écrire les données téléchargées relatives au contenu dans l'unité de stockage (13), et
dans lequel le moyen d'interdiction (22) est conçu pour interdire l'accès d'écriture des données relatives au contenu téléchargées par le moyen de téléchargement (23) dans l'unité de stockage (13) pendant la lecture des données relatives au contenu par le moyen de lecture (21).

3. Dispositif de traitement d'informations (1) selon la revendication 2,
dans lequel le moyen de téléchargement (23) est conçu pour interroger régulièrement le serveur de distribution de contenu (4) pour savoir s'il y a des données relatives au contenu à télécharger, et est conçu pour télécharger les données relatives au contenu s'il y des données relatives au contenu à télécharger.

4. Dispositif de traitement d'informations (1) selon la revendication 2,
dans lequel le moyen de téléchargement (23) est conçu pour interroger le serveur de distribution de contenu (4) pour savoir s'il y a des données relatives au contenu à télécharger lorsque le dispositif de traitement d'informations (1) est mis en marche et est ensuite conçu pour télécharger les données relatives au contenu s'il y a des données relatives au contenu à télécharger.

5. Dispositif de traitement d'informations (1) selon l'une quelconque des revendications 1 à 4,
dans lequel l'autre accès inclue l'accès de lecture des données relatives au contenu à partir de l'unité de stockage (13), qui est différente de la lecture par le moyen de lecture (21).

6. Dispositif de traitement d'informations (1) selon la revendication 5,
dans lequel le dispositif de traitement d'informations (1) est connecté à un terminal utilisateur (3) et comprend en outre :
un moyen de transfert de données (24) conçu pour lire les données relatives au contenu enregistrées dans l'unité de stockage (13) et pour transférer les données relatives au contenu lues dans le terminal utilisateur (3), et
dans lequel le moyen d'interdiction (22) est conçu pour interdire l'accès de lecture des données relatives au contenu par le moyen de transfert des données (24) pendant la lecture des données relatives au contenu par le moyen de lecture (21).

7. Dispositif de traitement d'informations (1) selon la revendication 5,
dans lequel le dispositif de traitement d'informations (1) est connecté à un dispositif de stockage extérieur (16) qui est différent de l'unité de stockage (13), et comprend en outre :
un moyen de transfert de données (24) conçu pour lire les données relatives au contenu enregistrées dans l'unité de stockage (13) et pour écrire les données relatives au contenu lues dans le dispositif de stockage extérieur (16), et
dans lequel le moyen d'interdiction (22) est conçu pour interdire l'accès de lecture des données relatives au contenu par le moyen de transfert des données (24) pendant la lecture des données relatives au contenu par le moyen de lecture (21).

8. Dispositif de traitement d'informations (1) selon l'une quelconque des revendications 1 à 7,
dans lequel le moyen d'interdiction (22) est conçu pour interdire l'autre accès en ne démarrant pas l'autre accès pendant la lecture des données relatives au contenu par le moyen de lecture (21).

9. Dispositif de traitement d'informations (1) selon l'une quelconque des revendications 1 à 7,
dans lequel le moyen d'interdiction (22) est conçu pour interdire l'autre accès en augmentant l'importance d'une différence entre une priorité d'une tâche de lecture par le moyen de lecture (21) et une priorité d'une tâche d'exécution de l'autre accès pendant la lecture des données relatives au contenu par le moyen de lecture (21).

10. Dispositif de traitement d'informations (1) selon l'une quelconque des revendications 1 à 7,
dans lequel le moyen d'interdiction (22) est conçu pour interdire l'autre accès en contrôlant une priorité d'une tâche d'exécution de l'autre accès inférieure à une priorité d'une tâche de lecture par le moyen de lecture (21) pendant la lecture des données relatives au contenu par le moyen de lecture (21).

11. Dispositif de traitement d'informations (1) selon l'une quelconque des revendications 1 à 4, comprenant en outre :
une mémoire temporaire (12) qui est différente de l'unité de stockage (13),
dans lequel le moyen d'interdiction (22) est conçu pour écrire des données qui sont à écrire dans l'unité de stockage (13),
dans la mémoire temporaire (12) pendant la lecture des données relatives au contenu par le moyen de lecture (21), et est conçu pour lire les données écrites dans la mémoire temporaire (12) et pour écrire les données lues dans l'unité de stockage (13) lorsque la lecture par le moyen de lecture (21) n'est pas exécutée.

12. Dispositif de traitement d'informations comprenant :
une étape (S11) de lecture de données relatives au contenu à partir d'une unité de stockage (13), destiné à la reproduction des données relatives au contenu enregistrées dans l'unité de stockage (13) ; et
une étape (S10) d'interdiction de tout accès à l'unité de stockage autre que l'accès de la lecture pendant la lecture des données relatives au contenu, destinée à la reproduction des données relatives au contenu, dans lequel l'autre accès est interrompu en cours lorsque la lecture des données relatives au contenu démarre, et
dans lequel l'autre accès inclue l'accès d'écriture de données téléchargées relatives au contenu dans l'unité de stockage (13) .

13. Procédé de traitement d'informations selon la revendication 12,
dans lequel le procédé est exécuté sur un dispositif de traitement d'informations selon l'une quelconque des revendications 1 à 11.
